# EUROPÄISCHE PATENTSCHRIFT

(11) **EP 4 063 706 B1**
(45) Veröffentlichungstag und Bekanntmachung des Hinweises auf die Patenterteilung: **07.06.2023**
(21) Anmeldenummer: 21164595.7
(22) Anmeldetag: 24.03.2021
(51) Int. Cl.: F16L 55/11

(54) **STOPFEN FÜR EINE DRUCKLOSE LEITUNG, INSBESONDERE HYDRAULIKLEITUNG**
PLUG FOR A PRESSURELESS LINE, IN PARTICULAR A HYDRAULIC LINE
BOUCHON POUR UNE CONDUITE SANS PRESSION, EN PARTICULIER CONDUITE HYDRAULIQUE

(43) Veröffentlichungstag der Anmeldung: 28.09.2022
(73) Patentinhaber: Mayrhofer Erdbewegungen GmbH, 5202 Neumarkt am Wallersee (AT)
(72) Erfinder: Mayrhofer, Josef, 5202 Neumarkt am Wallersee (AT)
(74) Vertreter: KLIMENT & HENHAPEL

(56) Entgegenhaltungen:
- DE-B3-102017 000 726
- US-A- 4 640 434
- US-A1- 2002 139 952
- US-A1- 2014 175 100

## Beschreibung

### GEBIET DER ERFINDUNG

Die vorliegende Erfindung betrifft einen Stopfen für eine drucklose Leitung, insbesondere Hydraulikleitung, wobei sich der Stopfen entlang einer Längsrichtung von einem Stopfenanfang zu einem Stopfenende erstreckt, wobei der Stopfen zumindest im Bereich des Stopfenendes verschlossen ist, der Stopfen umfassend zumindest einen Basisteil, der zumindest abschnittsweise die Form eines sich entlang der Längsrichtung verjüngenden Kegelstumpfs aufweist, wobei elastisch verformbare Lamellen vorgesehen sind, die vom zumindest einen Basisteil abstehen und quer, vorzugsweise normal, zur Längsrichtung verlaufen, wobei die Lamellen dazu eingerichtet sind, sich zumindest teilweise beim Einschieben des Stopfens in die Leitung elastisch zu verformen und dabei neben einer Abdichtung eine Klemmkraft zu erzeugen, die ausreicht, um den Stopfen gegen die Schwerkraft in der Leitung zu fixieren.

### STAND DER TECHNIK

Bei Wartungs- und Reparaturarbeiten an (offenen) Hydraulikleitungen eines Hydrauliksystems ist es notwendig, einerseits einen Austritt des Hydrauliköls aus der zu wartenden bzw. kaputten Leitung zu verhindern, wobei hier u.a. Umweltschutzgründe eine wichtige Rolle spielen. Andererseits soll auch ein Eintritt von Staub oder sonstigen Verschmutzungen in die Leitung unterbunden werden. Dabei ist die betrachtete Leitung druckfrei (sofern nicht explizit anderes angegeben ist, ist im Folgenden unter Leitung stets eine druckfreie Leitung zu verstehen), d.h. sie wird bei der Wartung bzw. Reparatur nicht extra mit Druck durch das Hydrauliksystem beaufschlagt.

Gleiches gilt natürlich auch für andere (offene) Teile des Hydrauliksystems, insbesondere für Hydraulikpumpen, wobei im Folgenden aus Gründen der Übersichtlichkeit meist nur die Hydraulikleitungen bzw. allgemein Leitungen explizit angeführt werden.

Dieselbe Problematik kann sich analog auch bei Leitungen bzw. Systemen mit anderen Flüssigkeiten (z.B. mit anderen Ölen, Wasser oder Kühlflüssigkeit), etwa im Sanitär-, Heizungs- oder Kühlungsbereich oder bei Solaranlagen, stellen.

Aus dem Stand der Technik sind zum Verschließen von solchen Leitungen (bzw. Teilen von Systemen) Stopfen bekannt, die im Wesentlichen die Form eines Zylinders oder eines Kegelstumpfes aufweisen und aus einem elastischen Material gefertigt sind, um unter elastischer Verformung in die offene Leitung gequetscht zu werden. Letzteres ist insbesondere bei zylinderförmigen Stopfen nur mit hohem Kraftaufwand möglich und entsprechend umständlich. Kegelstumpfförmige Stopfen können zwar leichter in der offenen Leitung angeordnet werden, allerdings ist deren Halt oft so schlecht, dass insbesondere bei nach unten gerichtetem Stopfen derselbe aufgrund der Schwerkraft aus der Leitung fallen kann. Außerdem hat die Federkraft, die auf eine erneute Ausdehnung des zusammengequetschten Stopfens hinwirkt, insbesondere bei kegelförmigen Stopfen, meist einen aus der Leitung hinaus weisenden Richtungsanteil, sodass der Stopfen dazu tendiert, sich nach einer gewissen Zeit aus der Leitung zu lösen. Schließlich zeigt sich in der Praxis, dass die Dichtheit bei den bekannten Lösungen nicht immer einwandfrei gegeben ist.

Aus der DE 102017000726 B3 ist ein Verschlussstopfen aus zwei scharnierartig verbundenen Halbschalen mit jeweils halbkreisförmigem Querschnitt bekannt, wobei die beiden Halbschalen im geschlossenen Zustand gemeinsam eine Kreiszylinderform bilden, die sich leicht konisch zu einem Ende erweitern kann. Von den Halbschalen stehen Dichtrippen ab, die abwechselnd höher und flacher ausgeführt sind, um das Einschieben des Verschlussstopfens in ein Rohr sowie das Herausziehen des Verschlussstopfens aus dem Rohr signifikant zu erleichtern.

Aus der US 2014/0175100 A1 ist ein Stopfen gemäß dem Oberbegriff des Anspruchs 1 bekannt.

Aus der US 4640434 A ist ein Stopfen zum Abdichten von Löchern in Kraftstofftanks bekannt, dessen Form einer Abfolge von Kegelstümpfen ohne abstehende Lamellen entspricht.

### AUFGABE DER ERFINDUNG

Es ist daher Aufgabe der vorliegenden Erfindung, einen Stopfen für drucklose Leitungen, insbesondere Hydraulikleitungen, zur Verfügung zu stellen, der die oben geschilderten Nachteile bekannter Stopfen überwindet. Insbesondere soll eine bequeme Applikation des Stopfens bei gutem Halt in der Leitung und hoher Dichtheit gewährleistet sein.

### DARSTELLUNG DER ERFINDUNG

Zur Lösung der genannten Aufgabe ist es bei einem Stopfen für eine drucklose Leitung, insbesondere Hydraulikleitung, wobei sich der Stopfen entlang einer Längsrichtung von einem Stopfenanfang zu einem Stopfenende erstreckt, wobei der Stopfen zumindest im Bereich des Stopfenendes verschlossen ist, der Stopfen umfassend zumindest einen Basisteil, der zumindest abschnittsweise die Form eines sich entlang der Längsrichtung verjüngenden Kegelstumpfs aufweist, wobei elastisch verformbare Lamellen vorgesehen sind, die vom zumindest einen Basisteil abstehen und quer, vorzugsweise normal, zur Längsrichtung verlaufen, wobei die Lamellen dazu eingerichtet sind, sich zumindest teilweise beim Einschieben des Stopfens in die Leitung elastisch zu verformen und dabei neben einer Abdichtung eine Klemmkraft zu erzeugen, die ausreicht, um den Stopfen gegen die Schwerkraft in der Leitung zu fixieren, erfindungsgemäß vorgesehen, dass mehrere, vorzugsweise zwei, Basisteile vorgesehen sind, die in Längsrichtung gesehen hintereinander angeordnet sind und bündig aneinander anschließen, wobei die Kegelstumpfformen der Basisteile unterschiedliche Öffnungswinkel aufweisen.

Es handelt sich bei dem Stopfen gemäß dem oben Gesagten insbesondere um einen Hydraulikleitungsstopfen.

Die Lamellen spiegeln grundsätzlich die Kegelstumpfform wider, d.h. die Einhüllende über alle Lamellen des jeweiligen Basisteils ist im Wesentlichen ebenfalls eine Kegelstumpfform oder ähnelt einer solchen zumindest. Entsprechend der sich ergebenden zulaufenden Form des Stopfens wird der Stopfen mit seinem Stopfenende in die offene Leitung bzw. in eine Leitungsöffnung geschoben, um die Leitung dicht zu verschließen.

Der Stopfen kann, z.B. aus Fertigungsgründen (etwa bei bestimmten Gieß- bzw. Spritzgussverfahren) und/oder zur Materialeinsparung, zumindest abschnittsweise hohl ausgeführt sein. Dass der Stopfen im Bereich des Stopfenendes verschlossen ist, verhindert auch in diesem Fall, dass durch den Stopfen selbst Flüssigkeit aus der Leitung nach außen - oder Schmutz von außen in die Leitung - treten kann, wenn der Stopfen in die Leitung eingeschoben ist.

In Abhängigkeit von den Durchmessern der Leitung und des Stopfens bzw. der Lamellen wird sich zumindest ein Teil der Lamellen (ab einer gewissen Größe bzw. ab einem gewissen Durchmesser, sofern zumindest der größte Lamellenquerschnitt größer als der lichte Querschnitt der Leitung ist) elastisch verformen, wenn der Stopfen in die Leitung eingeschoben wird. Diese Lamellen kontaktieren dabei zumindest mit einem freien Rand eine Innenwand der Leitung. Durch das Einschieben wird die jeweilige Lamelle mit ihrem freien Rand gegen die Längsrichtung verformt. Hinreichend kleine Lamellen kontaktieren die Innenwand der Leitung hingegen nicht und verformen sich entsprechend auch nicht.

Indem die hinreichend großen Lamellen die Innenwand der Leitung kontaktieren, wird die Leitung für die in ihr befindliche Flüssigkeit, insbesondere Hydraulikflüssigkeit, zuverlässig dicht verschlossen - die Lamellen liegen dichtend an der Innenwand an. Hierbei kann die resultierende Dichtwirkung nicht nur durch eine einzelne Lamelle, sondern auch durch mehrere aufeinander folgende Lamellen erzeugt werden, die allesamt an der Innenwand der Leitung anliegen und elastisch verformt sind. Entsprechend groß kann die resultierende Dichtwirkung sein.

Durch die elastische Verformung der Lamellen wird außerdem eine in einer Radialrichtung wirkende Klemmkraft erzeugt, die den Stopfen problemlos gegenüber der Schwerkraft in der Leitung fixiert, selbst wenn der Stopfen bzw. die mit dem Stopfen verschlossene Leitungsöffnung nach unten bzw. in Schwerkraftrichtung weist. Auch die resultierende Klemmkraft kann nicht nur durch eine einzelne Lamelle, sondern auch durch mehrere aufeinander folgende Lamellen erzeugt werden, die allesamt an der Innenwand der Leitung anliegen und elastisch verformt sind. Entsprechend groß kann die resultierende Klemmkraft sein.

Die Radialrichtung steht normal auf die Längsrichtung und weist von einer Längsachse des Stopfens weg, sodass die Radialrichtung typischerweise normal auf die Innenwand der Leitung steht, wenn der Stopfen in die Leitung eingeschoben ist. Die Radialrichtung ist rund um die Längsachse nicht festgelegt, d.h. genau genommen existieren unendlich viele Radialrichtungen und ist dies natürlich zu berücksichtigen, wenn der Einfachheit halber hier und im Folgenden nur von "einer" bzw. "der" Radialrichtung die Rede ist.

Beim Einschieben des Stopfens wird dieser in Längsrichtung bewegt bzw. werden die Lamellen, wie bereits erwähnt, gegen die Längsrichtung verformt. Aufgrund der, insbesondere einstellbaren, Lamellengeometrie kann diese Bewegung mit relativ wenig Kraftaufwand erfolgen, sodass das Einschieben des Stopfens in die Leitung problemlos und für den Benutzer bequem von diesem vorgenommen werden kann. Das Einschieben des Stopfens gestaltet sich daher weit bequemer als bei bekannten Stopfen.

Die beschriebene Verformung der Lamellen (gegen die Längsrichtung) kann zudem den Widerstand des Stopfens gegen eine Bewegung entgegen der Längsrichtung, also aus der Leitung heraus, erhöhen, da - in Abhängigkeit von der oben genannten Klemmkraft und der Reibung zwischen den Lamellen und der Innenwand der Leitung - bei einer solchen Bewegung die (verformten) Lamellen tendenziell genau entgegengesetzt verformt werden müssen. Ein besonders sicherer Halt des Stopfens in der Leitung ist die Folge.

Ein typischer Anwendungsfall für erfindungsgemäße Stopfen im Bereich von Hydraulikleitungen und -systemen wäre etwa, wenn ein Hydraulikschlauch platzt, sodass zwei offene Leitungsenden vorliegen. In letztere werden erfindungsgemäße Stopfen eingeschoben. Beim Ausbau der Leitungsteile werden auch in die weiteren Leitungsöffnungen Stopfen eingeschoben und ggf. in die Anschlüsse (etwa einer Hydraulikpumpe) für die Leitungen, um einen Austritt des Hydrauliköls in die Umwelt weitestgehend zu verhindern.

Grundsätzlich kann der erfindungsgemäße Stopfen in unterschiedlichen Größen hergestellt werden, um bei unterschiedlich dimensionierten Leitungen bzw. Anschlüssen eingesetzt werden zu können. Beim erfindungsgemäßen Stopfen ist vorgesehen, dass mehrere, vorzugsweise zwei, Basisteile vorgesehen sind, die in Längsrichtung gesehen hintereinander angeordnet sind und bündig aneinander anschließen, wobei die Kegelstumpfformen der Basisteile unterschiedliche Öffnungswinkel aufweisen. Eine optimale Einsetzbarkeit ein und desselben Stopfens bei Leitungen mit unterschiedlichsten Innendurchmessern bzw. lichten Querschnitten kann hierdurch realisiert werden.

Selbstverständlich können auch mehr als zwei Basisteile vorgesehen sein, z.B. drei, vier oder mehr.

Bei einer besonders bevorzugten Ausführungsform des erfindungsgemäßen Stopfens ist vorgesehen, dass entlang der Längsrichtung gesehen die Öffnungswinkel abnehmen. Hierdurch wird ein besonders feines bzw. spitzes Zulaufen des Stopfens ermöglicht, was wiederum das Einführen eines solchen Stopfens in eine Leitung für den Benutzer besonders leicht bzw. einfach macht.

Bei einer bevorzugten Ausführungsform des erfindungsgemäßen Stopfens ist vorgesehen, dass die Lamellen eben verlaufen. D.h. insbesondere verlaufen die Lamellen nicht spiralförmig um die Längsachse. Eine einfache Herstellung aber auch Handhabung resultiert durch die ebene Geometrie.

Die Geometrie der Lamellen kann auf die Geometrie der zu dichtenden Leitungen abgestimmt sein. Beispielsweise sind Leitungen denkbar, deren lichter Querschnitt von einer Kreisform abweicht, sodass die Lamellen eine entsprechende Geometrie aufweisen können, z.B. eine elliptische Geometrie. Typischerweise weisen die meisten Leitungen, insbesondere Hydraulikleitungen, jedoch kreisförmige lichte Querschnitte auf. Bei einer bevorzugten Ausführungsform des erfindungsgemäßen Stopfens ist daher vorgesehen, dass die Lamellen kreisförmig ausgebildet sind. D.h. die Lamellen weisen normal auf die Längsrichtung einen kreisförmigen Querschnitt bzw. einen durch einen Kreis nach außen begrenzten Querschnitt auf. Neben der besonders einfachen Herstellung resultiert eine entsprechend große Anwendbarkeit.

Wie bereits erwähnt, kann die Lamellengeometrie gezielt eingestellt werden, um eine gewünschte Klemmkraft und/oder Dichtwirkung zu erreichen. Weiters kann hierdurch auch der Kraftaufwand für das Einschieben des Stopfens in die Leitung beeinflusst werden. Beispielsweise kann eine Lamellenstärke erhöht oder erniedrigt werden, um die Klemmkraft bzw. Dichtwirkung (und den genannten Kraftaufwand) zu erhöhen oder zu erniedrigen. Bei einer bevorzugten Ausführungsform des erfindungsgemäßen Stopfens ist daher vorgesehen, dass die Lamellen eine parallel zur Längsrichtung gemessene Lamellenstärke aufweisen, die im Bereich von 0,1 mm bis 1 mm, vorzugsweise im Bereich von 0,3 mm bis 0,8 mm, liegt. Die genannten Bereiche der Lamellenstärke liefern insbesondere für typische Hydraulikleitungen einen optimalen Halt des Stopfens verbunden mit einer annähernd perfekten Abdichtung.

Alternativ oder zusätzlich kann vorgesehen sein, dass die Lamellen jeweils einen freien Rand aufweisen, der von einer Mantelfläche des jeweiligen Basisteils einen in einer Radialrichtung gemessenen Abstand aufweist, wobei die Radialrichtung normal auf die Längsrichtung steht und von einer Längsachse des Stopfens ausgehend von dieser weg weist, wobei der Abstand im Bereich von 0,5 mm bis 5 mm, vorzugsweise von 1 mm bis 3 mm, liegt. Tendenziell können durch größere Abstände beim Einschieben des Stopfens in die Leitung Verformungen der Lamellen mit größeren Krümmungsradien erzielt werden, um ein Einschieben mit geringerem Kraftaufwand zu ermöglichen und umgekehrt.

Bei einer bevorzugten Ausführungsform des erfindungsgemäßen Stopfens ist vorgesehen, dass die Lamellen jeweils einen freien Rand aufweisen, der von einer Mantelfläche des jeweiligen Basisteils einen in einer Radialrichtung gemessenen Abstand aufweist, wobei die Radialrichtung normal auf die Längsrichtung steht und von einer Längsachse des Stopfens ausgehend von dieser weg weist, dass der Abstand des Rands der jeweiligen Lamelle umfänglich um die Längsachse um höchstens 10% schwankt und dass Abstände der Ränder von aufeinander folgenden Lamellen sich um höchstens 10% unterscheiden. Hieraus resultiert eine sehr kontinuierliche bzw. stetige Zunahme der Klemmkraft und Dichtwirkung sowie des Kraftaufwands je weiter der Stopfen in die Leitung eingeschoben wird. Gleichzeitig sind (zumindest bei kreisförmigem lichten Querschnitt der Leitung) der Kraftaufwand und die Klemmkraft im Wesentlichen unabhängig von der konkreten Orientierung des Stopfens rund um die Längsachse, was die Anwendung vereinfacht.

Vorzugsweise schwankt der Abstand umfänglich um die Längsachse im Wesentlichen überhaupt nicht, d.h. bis auf unvermeidliche, insbesondere herstellungstechnisch bedingte, vernachlässigbare Unterschiede.

Vorzugsweise unterscheiden sich die Abstände der Ränder von aufeinander folgenden Lamellen im Wesentlichen überhaupt nicht, d.h. bis auf unvermeidliche, insbesondere herstellungstechnisch bedingte, vernachlässigbare Unterschiede.

Wie stark die Klemmkraft, die Dichtwirkung und der Kraftaufwand beim Einschieben des Stopfens in die Leitung zunehmen, kann auch durch die Dichte der Lamellen beeinflusst werden, d.h. durch eine Distanz (im Folgenden als Lamellendistanz bezeichnet) von aufeinander folgenden Lamellen zueinander. Entsprechend ist es bei einer bevorzugten Ausführungsform des erfindungsgemäßen Stopfens vorgesehen, dass aufeinander folgende Lamellen eine parallel zur Längsrichtung gemessene Lamellendistanz zueinander aufweisen, die im Bereich von 1,1 mm bis 3 mm, vorzugsweise im Bereich von 1,7 mm bis 2,4 mm, liegt. Die genannten Bereiche der Lamellendistanz liefern insbesondere für typische Hydraulikleitungen einen optimalen Halt des Stopfens verbunden mit einer annähernd perfekten Abdichtung bei komfortabel bzw. gleichmäßig zunehmendem Kraftaufwand für den Benutzer beim Einschieben des Stopfens in die Leitung.

Bei einer bevorzugten Ausführungsform des erfindungsgemäßen Stopfens ist vorgesehen, dass in Längsrichtung gesehen vor dem zumindest einen Basisteil ein zylinderförmiger Sockelabschnitt angeordnet ist, von dem zumindest eine Sockellamelle absteht, wobei die zumindest eine Sockellammelle sämtliche Lamellen in einer Radialrichtung überragt, um einen Anschlag für die Leitung auszubilden, wobei die Radialrichtung normal auf die Längsrichtung steht und von einer Längsachse des Stopfens ausgehend von dieser weg weist. Die mindestens eine Sockellamelle bzw. der Anschlag für das offene Leitungsende, in welches der Stopfen eingeschoben wird, stellt sicher, dass der Stopfen nicht zu weit in die Leitung eingeschoben werden kann, sodass ein Entfernen des Stopfens wesentlich schwieriger oder gar verunmöglicht werden würde.

Der Sockelabschnitt bildet typischerweise den Stopfenanfang aus.

Die zumindest eine Sockellamelle bewirkt außerdem einen gewissen Schutz für das Leitungsende und verbessert die Dichtwirkung des Stopfens gegen das Eindringen von Schmutz in die Leitung.

Schließlich erhöht der Sockelabschnitt mit der mindestens einen überstehenden Sockellamelle die mechanische Stabilität des Stopfens.

Bei einer besonders bevorzugten Ausführungsform des erfindungsgemäßen Stopfens ist vorgesehen, dass mehrere, vorzugsweise zwei, Sockellamellen vorgesehen sind, die im Wesentlichen gleich groß sind. Dies betrifft insbesondere eine Erstreckung der Sockellamellen normal zur Längsrichtung bzw. in einer Ebene normal zur Längsrichtung.

Die mehreren, insbesondere zwei, Sockellamellen ermöglichen eine weitere Erhöhung der mechanischen Stabilität des Stopfens. Darüberhinaus wird durch die gleiche Größe der Sockellamellen eine besonders gute Handhabbarkeit des Stopfens für den Benutzer geschaffen, da die Sockellamellen eine definierte Angriffsfläche für die Hand des Benutzers und ggf. für Werkzeuge, beispielsweise Zangen, bieten.

Selbstverständlich sind prinzipiell auch mehr als zwei Sockellamellen möglich, z.B. drei, vier oder mehr.

Bei einer besonders bevorzugten Ausführungsform des erfindungsgemäßen Stopfens ist vorgesehen, dass mehrere, vorzugsweise zwei, Sockellamellen vorgesehen sind, wobei aufeinander folgende Sockellamellen eine parallel zur Längsrichtung gemessene Sockellamellendistanz zueinander aufweisen, und dass die Sockellamellendistanz im Bereich von 1,1 mm bis 2,3 mm liegt und/oder um einen Faktor im Bereich von 0,5 bis 0,9 geringer ist als eine parallel zur Längsrichtung gemessene Lamellendistanz zwischen aufeinander folgenden Lamellen. Dies bewirkt eine besonders hohe mechanische Stabilität des Stopfens im Bereich des Sockelabschnitts bzw. erhöht die mechanische Stabilität des Stopfens im Bereich des Sockelabschnitts insbesondere im Vergleich zu den mit Lamellen versehenen Bereichen.

Bei einer besonders bevorzugten Ausführungsform des erfindungsgemäßen Stopfens ist vorgesehen, dass die zumindest eine Sockellamelle eine parallel zur Längsrichtung gemessene Sockellamellenstärke aufweist und dass die Sockellamellenstärke im Bereich von 1 mm bis 1,6 mm liegt und/oder um einen Faktor im Bereich von 1,2 bis 2, vorzugsweise im Bereich von 1,5 bis 1,7, größer ist als eine parallel zur Längsrichtung gemessene Lamellenstärke der Lamellen. Auch dies bewirkt eine besonders hohe mechanische Stabilität des Stopfens im Bereich des Sockelabschnitts bzw. erhöht die mechanische Stabilität des Stopfens im Bereich des Sockelabschnitts insbesondere im Vergleich zu den mit Lamellen versehenen Bereichen.

Zum Entfernen des eingeschobenen Stopfens kann z.B. mit einer Zange der Stopfen im Bereich des Stopfenanfangs, insbesondere im Bereich des Sockelabschnitts, kontaktiert, durch Drehungen gelockert bzw. gelöst und schließlich abgezogen werden. Bei einer besonders bevorzugten Ausführungsform des erfindungsgemäßen Stopfens ist vorgesehen, dass zumindest im Sockelabschnitt ein nach außen offenes Mitnahmeprofil, insbesondere ein Innensechskantprofil, ausgebildet ist. Das Mitnahmeprofil kann sich selbstverständlich auch über den Sockelabschnitt hinaus bis in den zumindest einen Basisteil erstrecken.

Das Mitnahmeprofil erleichtert das Entfernen des Stopfens, wenn dieser in die Leitung eingeschoben ist, da ein entsprechendes Werkzeug - ein Innensechskantschlüssel im Falle eines Innensechskantprofils (unter dem Markennamen "Inbus" bekannt) - in das Mitnahmeprofil eingeführt werden kann, um den Stopfen mittels Drehens lösen.

Natürlich ist das Mitnahmeprofil nicht auf ein Innensechskantprofil beschränkt, sondern ist auch jedes andere Mitnahmeprofil möglich, beispielsweise ein Innensechsrundprofil (unter dem Markennamen "Torx" bekannt). Weitere Beispiele für mögliche Mitnahmeprofile wären Mitnahmeprofile, die auf Kreuzschlitzschraubenzieher oder Schlitzschraubenzieher als Eingriffswerkzeug abgestimmt sind.

Bei einer bevorzugten Ausführungsform des erfindungsgemäßen Stopfens ist vorgesehen, dass der Stopfen aus Polypropylen, insbesondere einstückig, gefertigt ist. Die genannte Materialwahl erlaubt nicht nur die Herstellung mechanisch robuster Stopfen, sondern ist darüberhinaus in vielerlei Hinsicht vorteilhaft. Zum einen hält der Stopfen dauerhaft Temperaturen bis 70°C, bevorzugt bis 80°, besonders bevorzugt im Bereich von 0°C bis 100°C, aus. Insbesondere die genannten erhöhten Temperaturen können beim Einsatz des Stopfens zum Abdichten von Hydraulikleitungen in der Praxis auftreten. Zum anderen ist der Stopfen gegenüber einer Vielzahl von Flüssigkeiten, insbesondere gegenüber Hydraulikölen, chemisch hinreichend stabil. Weiters kann der Stopfen nach seiner Verwendung leicht gereinigt werden, was die problemlose Wiederverwendung ermöglicht. Aufgrund der Dichte, die im Bereich von 0,895 g/cm³ bis 0,92 g/cm³ liegt, schwimmt der Stopfen auf Wasser, was die Einsatzmöglichkeiten des Stopfens weiter erhöht. Schließlich erlaubt die genannte Materialwahl die kostengünstige Herstellung des Stopfens in hohen Stückzahlen mittels Spritzguss.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Seitenansicht einer ersten Ausführungsform des erfindungsgemäßen Stopfens
- Fig. 2: den Stopfen aus Fig. 1 in einer schematischen Darstellung von oben
- Fig. 3: den Stopfen aus Fig. 1 in einer schematischen Darstellung von unten
- Fig. 4: eine schematische Seitenansicht einer zweiten Ausführungsform des erfindungsgemäßen Stopfens
- Fig. 5: den Stopfen aus Fig. 4 in einer schematischen Darstellung von oben
- Fig. 6: den Stopfen aus Fig. 4 in einer schematischen Darstellung von unten
- Fig. 7: eine schematische Seitenansicht einer dritten Ausführungsform des erfindungsgemäßen Stopfens
- Fig. 8: den Stopfen aus Fig. 7 in einer schematischen Darstellung von oben
- Fig. 9: den Stopfen aus Fig. 7 in einer schematischen Darstellung von unten

### WEGE ZUR AUSFÜHRUNG DER ERFINDUNG

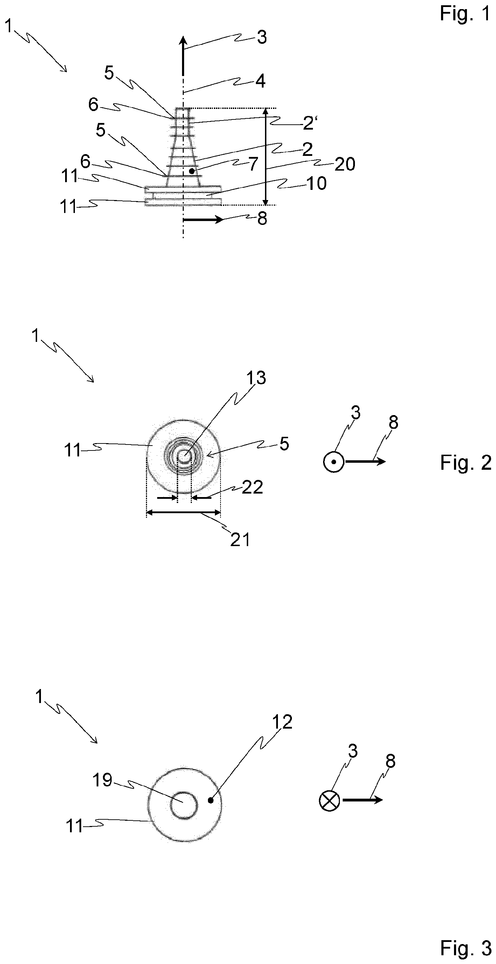

In den schematischen Darstellungen der Fig. 1, Fig. 2 und Fig. 3 ist eine erste Ausführungsform (bzw. ein erstes Ausführungsbeispiel) eines erfindungsgemäßen Stopfens 1 für eine drucklose Leitung (nicht dargestellt), insbesondere Hydraulikleitung, dargestellt. Der Stopfen 1 erstreckt sich mit einer Längsachse 4 entlang einer Längsrichtung 3 (vgl. Fig. 1) von einem Stopfenanfang 12 (vgl. Fig. 3) zu einem verschlossenen Stopfenende 13 (vgl. Fig. 2). Eine entlang der Längsachse 4 vom Stopfenanfang 12 bis zum Stopfenende 13 gemessene Länge 20 beträgt im ersten Ausführungsbeispiel ca. 21 mm.

Die dargestellte erste Ausführungsform des Stopfens 1 weist zwei kegelstumpfförmige, sich entlang der Längsrichtung 3 verjüngende Basisteile 2, 2` auf, die in Längsrichtung 3 gesehen hintereinander angeordnet sind und bündig aneinander anschließen. Die Kegelstumpfformen der Basisteile 2, 2' haben unterschiedliche Öffnungswinkel, wobei die Öffnungswinkel entlang der Längsrichtung 3 gesehen abnehmen, d.h. die Kegelstumpfform des Basisteils 2 hat einen größeren Öffnungswinkel als die Kegelstumpfform des Basisteils 2'.

Im Bereich des Stopfenanfangs 12 weist die dargestellte erste Ausführungsform des Stopfens 1 eine runde bzw. eine einen runden, insbesondere kreisförmigen, Querschnitt aufweisende Ausnehmung 19 auf, d.h. der Stopfen 1 ist abschnittsweise hohl ausgeführt.

Wie aus der Seitenansicht der Fig. 1 klar erkenntlich ist, stehen von den Basisteilen 2, 2' Lamellen 5 ab, die normal zur Längsrichtung 3 verlaufen.

Generell sind die Lamellen 5 elastisch verformbar und dazu eingerichtet, sich zumindest teilweise beim Einschieben des Stopfens 1 in die Leitung elastisch zu verformen und dabei neben einer Abdichtung eine Klemmkraft zu erzeugen, die ausreicht, um den Stopfen 1 gegen die Schwerkraft in der Leitung zu fixieren.

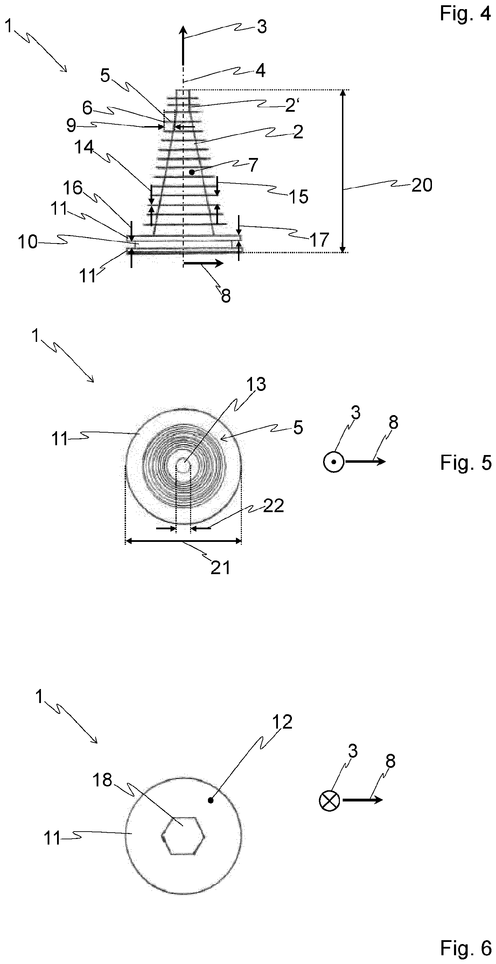

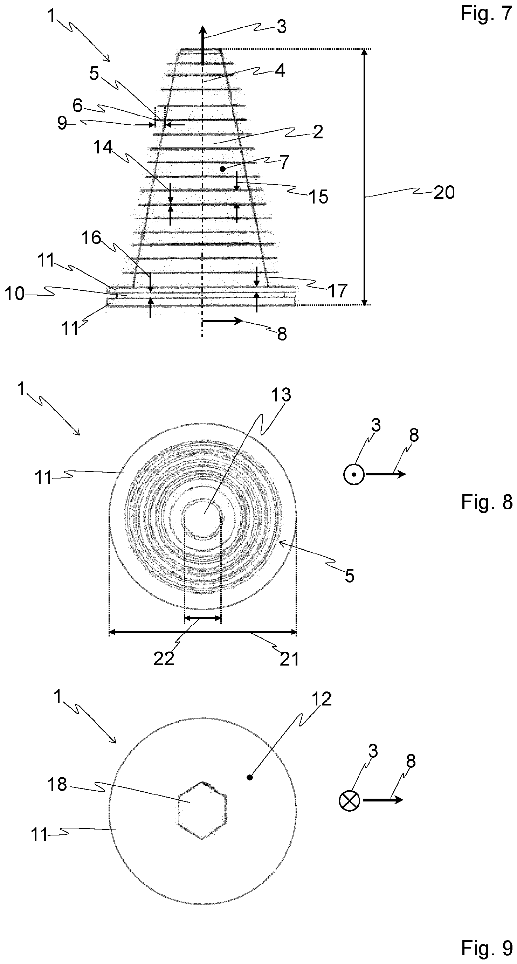

Bei der ersten beispielhaft dargestellten Ausführungsform - wie auch bei der zweiten beispielhaft dargestellten Ausführungsform, vgl. Fig. 4, Fig. 5 und Fig. 6, sowie auch bei der dritten beispielhaft dargestellten Ausführungsform, vgl. Fig. 7, Fig. 8 und Fig. 9 - sind die Lamellen 5 kreisförmig ausgebildet und verlaufen eben. Jeweils zwei aufeinander folgende Lamellen 5 weisen eine parallel zur Längsrichtung 3 gemessene Lamellendistanz 15 zueinander auf, die aus Klarheits- bzw. Platzgründen nur in Fig. 4 und Fig. 7 eingezeichnet ist. Weiters weisen die Lamellen 5 eine parallel zur Längsrichtung 3 gemessene Lamellenstärke 14 auf, die ebenfalls aus Klarheits- bzw. Platzgründen nur in Fig. 4 und Fig. 7 eingezeichnet ist. Schließlich weisen die Lamellen 5 einen freien Rand 6 auf, der von einer Mantelfläche 7 des jeweiligen Basisteils 2, 2' einen in einer Radialrichtung 8 gemessenen Abstand 9 aufweist, wobei der Abstand 9 ebenfalls aus Klarheits- bzw. Platzgründen nur in Fig. 4 und Fig. 7 eingezeichnet ist. Die Radialrichtung 8 steht normal auf die Längsrichtung 3 und weist von der Längsachse 4 des Stopfens 1 ausgehend von dieser weg. In den dargestellten Ausführungsbeispielen ist der Abstand 9 des Rands 6 der jeweiligen Lamelle 5 umfänglich um die Längsachse 4 im Wesentlichen konstant, und Abstände 9 der Ränder 6 von aufeinander folgenden Lamellen 5 unterscheiden sich im Wesentlichen nicht.

Im ersten Ausführungsbeispiel beträgt die Lamellendistanz 15 ca. 1,7 mm, die Lamellenstärke 14 ca. 0,3 mm und der Abstand 9 ca. 2,3 mm.

Weiters ist bei der ersten beispielhaft dargestellten Ausführungsform - wie auch bei der zweiten und dritten beispielhaft dargestellten Ausführungsform - ein zylinderförmiger Sockelabschnitt 10 vorgesehen, der in Längsrichtung 3 gesehen vor dem Basisteil 2 angeordnet ist und den Stopfenanfang 12 ausbildet, vgl. z.B. Fig. 1 in Verbindung mit Fig. 3. Der Sockelabschnitt 10 weist in den beispielhaft dargestellten Ausführungsformen zwei Sockellamellen 11 auf, die sämtliche Lamellen 5 in der Radialrichtung 8 überragen, um einen Anschlag für die Leitung auszubilden. Die Sockellamellen 11 weisen dabei eine parallel zur Längsrichtung 3 gemessene Sockellamellendistanz 16 zueinander auf. Weiters weist jede Sockellamelle 11 eine parallel zur Längsrichtung 3 gemessene Sockellamellenstärke 17 auf. Aus Klarheits- bzw. Platzgründen sind die Sockellamellendistanz 16 und die Sockellamellenstärke 17 nur in Fig. 4 und Fig. 7 eingezeichnet.

Insgesamt verjüngt sich der Stopfen 1 somit über seine gesamte Länge 20.

Im ersten Ausführungsbeispiel beträgt ein am Stopfenanfang 12 parallel zur Radialrichtung 8 gemessener Anfangsdurchmesser 21 ca. 16 mm. Dies entspricht dem Durchmesser der beiden Sockellamellen 11, d.h. diese weisen denselben Durchmesser auf. Ein am Stopfenende 13 parallel zur Radialrichtung 8 gemessener Enddurchmesser 22 beträgt im ersten Ausführungsbeispiel ca. 2,7 mm. Im ersten Ausführungsbeispiel weisen die Sockellamellen 11 außerdem eine gleiche Sockellamellenstärke 17 auf, die ca. 1,2 mm beträgt und damit wesentlich größer als die Lamellenstärke 14 ist. Die Sockellamellendistanz 16 ist mit ca. 1,7 mm im Wesentlichen gleich groß wie die Lamellendistanz 15. Die Sockellamellen 11 überragen die größte Lamelle 5 - das ist die in Längsrichtung 3 gesehen erste Lamelle 5 des Basisteils 2 - in Radialrichtung 8 um ca. 4 mm. D.h. die größte Lamelle 5 hat einen Durchmesser von ca. 8 mm. Den zylindrischen Sockelabschnitt 10 überragen die Sockellamellen 11 in Radialrichtung 8 um ca. 2 mm.

Entsprechend der sich ergebenden zulaufenden Form des Stopfens 1 wird der Stopfen 1 mit seinem Stopfenende 13 in die offene Leitung bzw. in eine Leitungsöffnung geschoben, um die Leitung dicht zu verschließen. In Abhängigkeit von den Durchmessern der Leitung und des Stopfens 1 bzw. der Lamellen 5 verformt sich zumindest ein Teil der Lamellen 5 (ab einer gewissen Größe bzw. ab einem gewissen Durchmesser) elastisch, wenn der Stopfen 1 in die Leitung eingeschoben wird. Diese Lamellen 5 kontaktieren dabei zumindest mit ihrem freien Rand 6 eine Innenwand der Leitung. Durch das Einschieben wird die jeweilige Lamelle 5 mit ihrem freien Rand 6 gegen die Längsrichtung 3 verformt. Hinreichend kleine Lamellen 5 kontaktieren die Innenwand der Leitung hingegen nicht und verformen sich entsprechend auch nicht. Indem die hinreichend großen Lamellen 5 die Innenwand der Leitung kontaktieren, wird die Leitung für die in ihr befindliche Flüssigkeit, insbesondere Hydraulikflüssigkeit, zuverlässig dicht verschlossen - die Lamellen 5 liegen dichtend an der Innenwand an. Insbesondere wenn der Stopfen 1 hinreichend weit in die Leitung eingeschoben ist, kann die resultierende Dichtwirkung nicht nur durch eine einzelne Lamelle 5, sondern auch durch mehrere aufeinander folgende Lamellen 5 erzeugt werden, die allesamt an der Innenwand der Leitung anliegen und elastisch verformt sind. Entsprechend groß kann die resultierende Dichtwirkung sein. Durch die elastische Verformung der Lamellen 5 wird außerdem eine in Radialrichtung 8 wirkende Klemmkraft erzeugt, die den Stopfen 1 problemlos gegenüber der Schwerkraft in der Leitung fixiert, selbst wenn der Stopfen 1 bzw. die mit dem Stopfen 1 verschlossene Leitungsöffnung nach unten bzw. in Schwerkraftrichtung weist. Auch die resultierende Klemmkraft kann nicht nur durch eine einzelne Lamelle 5, sondern auch durch mehrere aufeinander folgende Lamellen 5 erzeugt werden, die allesamt an der Innenwand der Leitung anliegen und elastisch verformt sind. Entsprechend groß kann die resultierende Klemmkraft sein.

Der Stopfen 1 des ersten Ausführungsbeispiels eignet sich gemäß den oben genannten Angaben zur Abdichtung von Leitungen mit einem lichten Durchmesser, der jedenfalls größer als 2,7 mm und kleiner als 8 mm ist und vorzugsweise im Bereich von 5 mm bis 5,7 mm liegt.

Das in Fig. 4, Fig. 5 und Fig. 6 dargestellte zweite Ausführungsbeispiel unterscheidet sich vom ersten Ausführungsbeispiel im Wesentlichen durch die Dimensionen des Stopfens 1. Konkret beträgt in diesem Fall die Länge 20 ca. 36 mm, der Anfangsdurchmesser 21 ca. 25 mm und der Enddurchmesser 22 ca. 3,7 mm. Der Abstand 9 des freien Rands 6 der Lamellen 5 beträgt ca. 1,7 mm, die Lamellendistanz 15 ca. 1,7 mm und die Lamellenstärke 14 ca. 0,6 mm. Die Sockellamellenstärke 17 der beiden Sockellamellen 11 beträgt ca. 1,3 mm und die Sockellamellendistanz 16 ca. 1,7 mm. Die Sockellamellen 11 überragen die größte Lamelle 5 - das ist die in Längsrichtung 3 gesehen erste Lamelle 5 des Basisteils 2 - in Radialrichtung 8 um ca. 3 mm. D.h. die größte Lamelle 5 hat einen Durchmesser von ca. 19 mm. Den zylindrischen Sockelabschnitt 10 überragen die Sockellamellen 11 in Radialrichtung 8 um ca. 2 mm.

Der Stopfen 1 des zweiten Ausführungsbeispiels eignet sich gemäß den genannten Angaben zur Abdichtung von Leitungen mit einem lichten Durchmesser, der jedenfalls größer als 3,7 mm und kleiner als 19 mm ist und vorzugsweise im Bereich von 5,4 mm bis 17,3 mm liegt.

Ein weiterer Unterschied des Stopfens 1 des zweiten Ausführungsbeispiels im Vergleich zum Stopfen 1 des ersten Ausführungsbeispiels ist, dass beim zweiten Ausführungsbeispiel ein nach außen offenes Mitnahmeprofil 18 in Form eines Innensechskantprofils im Sockelabschnitt 10 ausgebildet ist. Dies erleichtert das Lösen des Stopfens 1 aus einer Leitung, indem ein entsprechender Inbusschlüssel in das Innensechskantprofil eingeführt wird, um den Stopfen 1 durch Drehbewegungen zu lockern.

Davon abgesehen gilt für das zweite Ausführungsbeispiel das oben zum ersten Ausführungsbeispiel Gesagte.

Das in Fig. 7, Fig. 8 und Fig. 9 dargestellte dritte Ausführungsbeispiel unterscheidet sich vom zweiten Ausführungsbeispiel im Wesentlichen durch die Dimensionen des Stopfens 1 und dadurch, dass nur ein Basisteil 2 vorgesehen ist.

Wie aus der Seitenansicht der Fig. 7 in Verbindung mit Fig. 8 hervorgeht, ist der Stopfen 1 im Bereich seines Stopfenendes 13 außerdem etwas abgerundet, um das Einführen in die Leitung zu erleichtern.

Die Länge 20 beträgt ca. 60 mm, der Anfangsdurchmesser 21 ca. 40 mm und der Enddurchmesser 22 ca. 9 mm. Der Abstand 9 des freien Rands 6 der Lamellen 5 beträgt ca. 2,3 mm, die Lamellendistanz 15 ca. 2,4 mm und die Lamellenstärke 14 ca. 0,8 mm. Die Sockellamellenstärke 17 der beiden Sockellamellen 11 beträgt ca. 1,3 mm und die Sockellamellendistanz 16 ca. 1,7 mm. Die Sockellamellen 11 überragen die größte Lamelle 5 - das ist die in Längsrichtung 3 gesehen erste Lamelle 5 des Basisteils 2 - in Radialrichtung 8 um ca. 4 mm. D.h. die größte Lamelle 5 hat einen Durchmesser von ca. 32 mm. Den zylindrischen Sockelabschnitt 10 überragen die Sockellamellen 11 in Radialrichtung 8 um ca. 2 mm.

Der Stopfen 1 des dritten Ausführungsbeispiels eignet sich gemäß den genannten Angaben zur Abdichtung von Leitungen mit einem lichten Durchmesser, der jedenfalls größer als 9 mm und kleiner als 32 mm ist und vorzugsweise im Bereich von 11,3 mm bis 29,7 mm liegt.

Auch beim dritten Ausführungsbeispiel ist ein nach außen offenes Mitnahmeprofil 18 in Form eines Innensechskantprofils im Sockelabschnitt 10 ausgebildet, um ein leichteres Lösen des Stopfens 1 aus einer Leitung mittels eines Inbusschlüssels zu ermöglichen.

Davon abgesehen gilt für das dritte Ausführungsbeispiel das oben zum ersten und zum zweiten Ausführungsbeispiel Gesagte.

Bei allen drei beispielhaft dargestellten Ausführungsformen ist der Stopfen 1 einstückig aus Polypropylen gefertigt, um u.a. Temperaturen im Bereich von 70° bis 80° dauerhaft widerstehen zu können und leicht reinigbar zu sein.

### BEZUGSZEICHENLISTE

- 1: Stopfen
- 2, 2`: Basisteil
- 3: Längsrichtung
- 4: Längsachse
- 5: Lamelle
- 6: Rand
- 7: Mantelfläche
- 8: Radialrichtung
- 9: Abstand
- 10: Sockelabschnitt
- 11: Sockellamelle
- 12: Stopfenanfang
- 13: Stopfenende
- 14: Lamellenstärke
- 15: Lamellendistanz
- 16: Sockellamellendistanz
- 17: Sockellamellenstärke
- 18: Mitnahmeprofil
- 19: Ausnehmung
- 20: Länge
- 21: Anfangsdurchmesser
- 22: Enddurchmesser

## Patentansprüche

1. Stopfen (1) für eine drucklose Leitung, insbesondere Hydraulikleitung, wobei sich der Stopfen (1) entlang einer Längsrichtung (3) von einem Stopfenanfang (12) zu einem Stopfenende (13) erstreckt, wobei der Stopfen (1) zumindest im Bereich des Stopfenendes (13) verschlossen ist, der Stopfen (1) umfassend zumindest einen Basisteil (2, 2'), der zumindest abschnittsweise die Form eines sich entlang der Längsrichtung (3) verjüngenden Kegelstumpfs aufweist, wobei elastisch verformbare Lamellen (5) vorgesehen sind, die vom zumindest einen Basisteil (2, 2') abstehen und quer, vorzugsweise normal, zur Längsrichtung (3) verlaufen, wobei die Lamellen (5) dazu eingerichtet sind, sich zumindest teilweise beim Einschieben des Stopfens (1) in die Leitung elastisch zu verformen und dabei neben einer Abdichtung eine Klemmkraft zu erzeugen, die ausreicht, um den Stopfen (1) gegen die Schwerkraft in der Leitung zu fixieren, **dadurch gekennzeichnet, dass** mehrere, vorzugsweise zwei, Basisteile (2, 2') vorgesehen sind, die in Längsrichtung (3) gesehen hintereinander angeordnet sind und bündig aneinander anschließen, wobei die Kegelstumpfformen der Basisteile (2, 2') unterschiedliche Öffnungswinkel aufweisen.

2. Stopfen (1) nach Anspruch 1, **dadurch gekennzeichnet, dass** entlang der Längsrichtung (3) gesehen die Öffnungswinkel abnehmen.

3. Stopfen (1) nach einem der Ansprüche 1 bis 2, **dadurch gekennzeichnet, dass** die Lamellen (5) eben verlaufen.

4. Stopfen (1) nach einem der Ansprüche 1 bis 3, **dadurch gekennzeichnet, dass** die Lamellen (5) kreisförmig ausgebildet sind.

5. Stopfen (1) nach einem der Ansprüche 1 bis 4, **dadurch gekennzeichnet, dass** die Lamellen (5) eine parallel zur Längsrichtung (3) gemessene Lamellenstärke (14) aufweisen, die im Bereich von 0,1 mm bis 1 mm, vorzugsweise im Bereich von 0,3 mm bis 0,8 mm, liegt.

6. Stopfen (1) nach einem der Ansprüche 1 bis 5, **dadurch gekennzeichnet, dass** aufeinander folgende Lamellen (5) eine parallel zur Längsrichtung (3) gemessene Lamellendistanz (15) zueinander aufweisen, die im Bereich von 1,1 mm bis 3 mm, vorzugsweise im Bereich von 1,7 mm bis 2,4 mm, liegt.

7. Stopfen (1) nach einem der Ansprüche 1 bis 6, **dadurch gekennzeichnet, dass** die Lamellen (5) jeweils einen freien Rand (6) aufweisen, der von einer Mantelfläche (7) des jeweiligen Basisteils (2, 2') einen in einer Radialrichtung (8) gemessenen Abstand (9) aufweist, wobei die Radialrichtung (8) normal auf die Längsrichtung (3) steht und von einer Längsachse (4) des Stopfens (1) ausgehend von dieser weg weist, dass der Abstand (9) des Rands (6) der jeweiligen Lamelle (5) umfänglich um die Längsachse (4) um höchstens 10% schwankt und dass Abstände (9) der Ränder (6) von aufeinander folgenden Lamellen (5) sich um höchstens 10% unterscheiden.

8. Stopfen (1) nach einem der Ansprüche 1 bis 7, **dadurch gekennzeichnet, dass** die Lamellen (5) jeweils einen freien Rand (6) aufweisen, der von einer Mantelfläche (7) des jeweiligen Basisteils (2, 2') einen in einer Radialrichtung (8) gemessenen Abstand (9) aufweist, wobei die Radialrichtung (8) normal auf die Längsrichtung (3) steht und von einer Längsachse (4) des Stopfens (1) ausgehend von dieser weg weist, wobei der Abstand (9) im Bereich von 0,5 mm bis 5 mm, vorzugsweise von 1 mm bis 3 mm, liegt.

9. Stopfen (1) nach einem der Ansprüche 1 bis 8, **dadurch gekennzeichnet, dass** in Längsrichtung (3) gesehen vor dem zumindest einen Basisteil (2, 2') ein zylinderförmiger Sockelabschnitt (10) angeordnet ist, von dem zumindest eine Sockellamelle (11) absteht, wobei die zumindest eine Sockellammelle (11) sämtliche Lamellen (5) in einer Radialrichtung (8) überragt, um einen Anschlag für die Leitung auszubilden, wobei die Radialrichtung (8) normal auf die Längsrichtung (3) steht und von einer Längsachse (4) des Stopfens (1) ausgehend von dieser weg weist.

10. Stopfen (1) nach Anspruch 9, **dadurch gekennzeichnet, dass** mehrere, vorzugsweise zwei, Sockellamellen (11) vorgesehen sind, die im Wesentlichen gleich groß sind.

11. Stopfen (1) nach einem der Ansprüche 9 bis 10,
**dadurch gekennzeichnet, dass** mehrere, vorzugsweise zwei, Sockellamellen (11) vorgesehen sind, wobei aufeinander folgende Sockellamellen (11) eine parallel zur Längsrichtung (3) gemessene Sockellamellendistanz (16) zueinander aufweisen,
und dass die Sockellamellendistanz (16) im Bereich von 1,1 mm bis 2,3 mm liegt und/oder um einen Faktor im Bereich von 0,5 bis 0,9 geringer ist als eine parallel zur Längsrichtung (3) gemessene Lamellendistanz (15) zwischen aufeinander folgenden Lamellen (5).

12. Stopfen (1) nach einem der Ansprüche 9 bis 11, **dadurch gekennzeichnet, dass** die zumindest eine Sockellamelle (11) eine parallel zur Längsrichtung (3) gemessene Sockellamellenstärke (17) aufweist und dass die Sockellamellenstärke (17) im Bereich von 1 mm bis 1,6 mm liegt und/oder um einen Faktor im Bereich von 1,2 bis 2, vorzugsweise im Bereich von 1,5 bis 1,7, größer ist als eine parallel zur Längsrichtung (3) gemessene Lamellenstärke (14) der Lamellen (5).

13. Stopfen (1) nach einem der Ansprüche 9 bis 12,
**dadurch gekennzeichnet, dass** zumindest im Sockelabschnitt (10) ein nach außen offenes Mitnahmeprofil (18), insbesondere ein Innensechskantprofil, ausgebildet ist.

14. Stopfen (1) nach einem der Ansprüche 1 bis 13,
**dadurch gekennzeichnet, dass** der Stopfen (1) aus Polypropylen, insbesondere einstückig, gefertigt ist.

## Claims

1. Plug (1) for a pressureless line, in particular a hydraulic line, wherein the plug (1) extends along a longitudinal direction (3) from a plug start (12) to a plug end (13), wherein the plug (1) is closed at least in the region of the plug end (13), the plug (1) comprising at least one base part (2, 2') which at least in sections has the shape of a truncated cone tapering along the longitudinal direction (3), wherein elastically deformable lamellae (5) are provided which project from the at least one base part (2, 2') and extend transversely, preferably normally, to the longitudinal direction (3), wherein the lamellae (5) are adapted to deform elastically at least partially when the plug (1) is inserted into the line, and thereby generate, in addition to a sealing, a clamping force which is sufficient to fix the plug (1) in the line against the force of gravity, **characterized in that** several, preferably two, base parts (2, 2') are provided which, as viewed in the longitudinal direction (3), are arranged one behind the other and adjoin one another flush, wherein the truncated cone shapes of the base parts (2, 2') have different opening angles.

2. Plug (1) according to claim 1, **characterized in that,** as viewed along the longitudinal direction (3), the opening angles decrease.

3. Plug (1) according to one of claims 1 to 2, **characterized in that** the lamellae (5) extend in a flat manner.

4. Plug (1) according to one of claims 1 to 3, **characterized in that** the lamellae (5) are of circular design.

5. Plug (1) according to one of claims 1 to 4, **characterized in that** the lamellae (5) have a lamella thickness (14) measured parallel to the longitudinal direction (3), which is in the range from 0.1 mm to 1 mm, preferably in the range from 0.3 mm to 0.8 mm.

6. Plug (1) according to one of claims 1 to 5, **characterized in that** successive lamellae (5) have a lamella distance (15) from one another, measured parallel to the longitudinal direction (3), which is in the range from 1.1 mm to 3 mm, preferably in the range from 1.7 mm to 2.4 mm.

7. Plug (1) according to one of claims 1 to 6, **characterized in that** the lamellae (5) each have a free edge (6) which is at a distance (9) from a lateral surface (7) of the respective base part (2, 2') measured in a radial direction (8), wherein the radial direction (8) is normal to the longitudinal direction (3) and faces away from a longitudinal axis (4) of the plug (1), **in that** the distance (9) of the edge (6) of the respective lamella (5) varies circumferentially about the longitudinal axis (4) by at most 10%, and **in that** distances (9) of the edges (6) of successive lamellae (5) differ by at most 10%.

8. Plug (1) according to one of claims 1 to 7, **characterized in that** the lamellae (5) each have a free edge (6) which is at a distance (9) from a lateral surface (7) of the respective base part (2, 2') measured in a radial direction (8), wherein the radial direction (8) is normal to the longitudinal direction (3) and, starting from a longitudinal axis (4) of the plug (1), faces away therefrom, wherein the distance (9) is in the range from 0.5 mm to 5 mm, preferably from 1 mm to 3 mm.

9. Plug (1) according to one of claims 1 to 8, **characterized in that,** as viewed in longitudinal direction (3), a cylindrical base section (10) is arranged in front of the at least one base part (2, 2'), from which base section at least one base lamella (11) projects, wherein the at least one base lamella (11) projects beyond all the lamellae (5) in a radial direction (8) to form a stop for the line, wherein the radial direction (8) is normal to the longitudinal direction (3) and, starting from a longitudinal axis (4) of the plug (1), faces away therefrom.

10. Plug (1) according to claim 9, **characterized in that** several, preferably two, base lamellae (11) are provided which are substantially equal in size.

11. Plug (1) according to one of claims 9 to 10, **characterized in that** several, preferably two, base lamellae (11) are provided, wherein successive base lamellae (11) have a base lamella distance (16) from one another measured parallel to the longitudinal direction (3), and **in that** the base lamella distance (16) is in the range from 1.1 mm to 2.3 mm and/or is smaller by a factor in the range from 0.5 to 0.9 than a lamella distance (15) between successive lamellae (5) measured parallel to the longitudinal direction (3).

12. Plug (1) according to one of claims 9 to 11, **characterized in that** the at least one base lamella (11) has a base lamella thickness (17) measured parallel to the longitudinal direction (3) and **in that** the base lamella thickness (17) is in the range from 1 mm to 1.6 mm and/or is greater by a factor in the range from 1.2 to 2, preferably in the range from 1.5 to 1.7, than a lamella thickness (14) of the lamellae (5) measured parallel to the longitudinal direction (3).

13. Plug (1) according to one of claims 9 to 12, **characterized in that** an outwardly open driving profile (18), in particular an inner hexagonal profile, is formed at least in the base section (10).

14. Plug (1) according to one of claims 1 to 13, **characterized in that** the plug (1) is made of polypropylene, in particular in one piece.

## Revendications

1. Bouchon (1) pour une conduite sans pression, en particulier une conduite hydraulique, lequel bouchon (1) s'étend dans une direction longitudinale (3) d'un début du bouchon (12) à une fin du bouchon (13), lequel bouchon (1) est fermé au moins au niveau de la fin du bouchon (13), lequel bouchon (1) comprend au moins une partie de base (2, 2'), qui présente au moins en partie la forme d'un tronc de cône qui diminue dans la direction longitudinale (3), des lamelles (5) déformables élastiquement étant prévues, qui s'écartent au moins d'une partie de base (2, 2') et s'étendent dans un sens transversal, de préférence perpendiculaire, par rapport à la direction longitudinale (3), les lamelles (5) étant conçues pour se déformer au moins en partie de façon élastique lors de l'insertion du bouchon (1) et créer non seulement une étanchéité mais aussi une force de serrage pour immobiliser le bouchon (1) contre la gravité dans la conduite, **caractérisé en ce que** sont prévues plusieurs parties de base (2, 2'), de préférence deux, qui sont disposées les unes derrière les autres dans la direction longitudinale (3) et se font suite en affleurement les unes des autres, les formes tronconiques des parties de base (2, 2') présentant des angles d'ouverture différents.

2. Bouchon (1) selon la revendication 1, **caractérisé en ce que** les angles d'ouverture diminuent dans la direction longitudinale (3).

3. Bouchon (1) selon l'une des revendications 1 à 2, **caractérisé en ce que** les lamelles (5) sont planes.

4. Bouchon (1) selon l'une des revendications 1 à 3, **caractérisé en ce que** les lamelles (5) ont une forme circulaire.

5. Bouchon (1) selon l'une des revendications 1 à 4, **caractérisé en ce que** les lamelles (5) présentent une épaisseur de lamelle (14), mesurée parallèlement à la direction longitudinale (3), qui est comprise entre 0,1 mm et 1 mm, de préférence entre 0,3 mm et 0,8 mm.

6. Bouchon (1) selon l'une des revendications 1 à 5, **caractérisé en ce que** des lamelles (5) successives présentent une distance entre lamelles (15), mesurée parallèlement à la direction longitudinale (3), qui est comprise entre 1,1 mm et 3 mm, de préférence entre 1,7 mm et 2,4 mm.

7. Bouchon (1) selon l'une des revendications 1 à 6, **caractérisé en ce que** les lamelles (5) présentent chacune un bord libre (6) qui présente un écartement (9) d'une surface d'enveloppe (7) de chaque partie de base (2, 2') mesuré dans une direction radiale (8), laquelle direction radiale (8) est perpendiculaire à la direction longitudinale (3) et s'éloigne d'un axe longitudinal (4) du bouchon (1) à partir de celui-ci, **en ce que** l'écartement (9) du bord (6) de chaque lamelle (5) sur la circonférence autour de l'axe longitudinal (4) varie de 10 % au maximum et **en ce que** les écartements (9) des bords (6) de lamelles (5) successives diffèrent de 10 % au maximum.

8. Bouchon (1) selon l'une des revendications 1 à 7, **caractérisé en ce que** les lamelles (5) présentent chacune un bord libre (6) qui présente un écartement (9) d'une surface d'enveloppe (7) de chaque partie de base (2, 2') mesuré dans une direction radiale (8), laquelle direction radiale (8) est perpendiculaire à la direction longitudinale (3) et s'éloigne d'un axe longitudinal (4) du bouchon (1) à partir de celui-ci, l'écartement (9) étant compris entre 0,5 mm et 5 mm, de préférence entre 1 mm et 3 mm.

9. Bouchon (1) selon l'une des revendications 1 à 8, **caractérisé en ce qu'**une section de socle (10) cylindrique est disposée, vue dans la direction longitudinale (3), devant l'au moins une partie de base (2, 2') et il en part au moins une lamelle de socle (11), l'au moins une lamelle de socle (11) dépassant de toutes les lamelles (5) dans une direction radiale (8) pour former une butée pour la conduite, la direction radiale (8) étant perpendiculaire à direction longitudinale (3) et s'éloignant d'un axe longitudinal (4) du bouchon (1) à partir de celui-ci.

10. Bouchon (1) selon la revendication 9, **caractérisé en ce que** sont prévues plusieurs lamelles de socle (11), de préférence deux, qui sont sensiblement de la même taille.

11. Bouchon (1) selon l'une des revendications 9 à 10, **caractérisé en ce que** sont prévues plusieurs lamelles de socle (11), de préférence deux, les lamelles de socle (11) successives présentant une distance entre lamelles de socle (16) dans la direction longitudinale (3), et **en ce que** la distance entre lamelles de socle (16) est comprise entre 1,1 mm et 2,3 mm et/ou est plus petite d'un facteur de 0,5 à 0,9 qu'une distance entre lamelles (15) mesurée parallèlement à la direction longitudinale (3) entre des lamelles (5) successives.

12. Bouchon (1) selon l'une des revendications 9 à 11, **caractérisé en ce que** l'au moins une lamelle de socle (11) présente une épaisseur de lamelle de socle (17) mesurée parallèlement à la direction longitudinale (3)
et **en ce que** l'épaisseur de lamelle de socle (17) est comprise entre 1 mm et 1,6 mm et/ou plus grande d'un facteur de 1,2 à 2, de préférence de 1,5 à 1,7, qu'une épaisseur des lamelle (14) des lamelles (5) mesurée parallèlement à la direction longitudinale (3).

13. Bouchon (1) selon l'une des revendications 9 à 12, **caractérisé en ce qu'**un profil d'entraînement (18) ouvert vers l'extérieur, en particulier un réceptacle hexagonal, est formé au moins dans la section de socle (10).

14. Bouchon (1) selon l'une des revendications 1 à 13, **caractérisé en ce que** le bouchon (1) est fabriqué en polypropylène, en particulier d'une pièce.
